(19) Europäisches Patentamt
European Patent Office
Office européen des brevets

(11) Publication number: 0 198 954 B1

(12) # EUROPEAN PATENT SPECIFICATION

(45) Date of publication of the patent specification: 21.03.90

(51) Int. Cl.⁴: **G02F 1/133**, G09G 3/36

(21) Application number: 85115323.9

(22) Date of filing: 03.12.85

(54) **Liquid crystal display.**

(30) Priority: 17.04.85 US 724128

(43) Date of publication of application: 29.10.86 Bulletin 86/44

(45) Publication of the grant of the patent: 21.03.90 Bulletin 90/12

(84) Designated Contracting States: DE FR GB

(73) Proprietor: International Business Machines Corporation, Old Orchard Road, Armonk, N.Y. 10504(US)

(72) Inventor: Larsen, Thor Arne, 17 Niles Drive, Woodstock New York 12498(US)

(74) Representative: Grant, Iain Murray, IBM United Kingdom Limited Intellectual Property Department Hursley Park, Winchester Hampshire SO21 2JN(GB)

(56) References cited:
EP-A- 0 034 796
US-A- 4 443 064

IBM TECHNICAL DISCLOSURE BULLETIN, vol. 24, no. 7B, Dec. 1981 S.W. Depp. A. Juliana:"Method of fabricating FET in polycristalline silicon" pages 3640-3641
IEEE ELECTRON DEVICE LETTERS, vol. EDL-1, no. 9, Sept. 1980 D.J. Dimaria et al.:"Electrically-Alterable Memory Using a Dual Electron Injector Structure" pages 179-181
IBM TECHNICAL DISCLOSURE BULLETIN, vol. 23, no. 8, January 1981 S.W. Deep, A. Juliana:"Liquid Crystal Display Driver Circuit and PolysiliconComponents Therefor" pages 3863-3864
IBM TECHNICAL DISCLOSURE BULLETIN, vol. 23, no. 6,

(56) References cited: (continuation)
Nov. 1980 S.W. Deep et al.:"Liquid Crystal Drive Circuit" pages 2557-2558

EP 0 198 954 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to liquid crystal display devices and provides a conducting glass plate; a substrate; a matrix of electrodes; each of the electrodes defining a picture element (pel) in the LCD; a twisted nematic with dye liquid crystal material interposed between the glass plate and the substrate, being bounded on one side by the polysilicon; a plurality of FET devices formed in the polysilicon, there being one or more FET devices associated with each of the electrodes, each FET device being connected to external control signal lines, the FET devices comprising data storage and pel signal selection means; and means for applying control signals selectively to the FET devices to display an image on the LCD, characterised in that a polysilicon layer is deposited on the substrate, supporting the matrix of electrodes and bounding the liquid crystal material on one side; in that the plurality of FET devices are formed in the polysilicon layer and in that said FET devices belong to the Dual Electron Injector Structure category.

The following are circuits representative of the prior art:-

US-A-3 872 360 to Dill et al shows a drive system for a dynamic scattering liquid crystal display material which is driven by a D C signal applied via a capacitor. The capacitor is selected and periodically charged by a translator. The drive system of US-A-3 872 360 employs a DC voltage signal in the range of twenty to thirty volts to drive a dynamic scattering LCD, whereas a drive circuit according to the present invention employs an AC signal in the range of 1.5 volts rms to drive a twisted nematic liquid crystal display material. Dynamic scattering liquid crystal display material has yet to be proven to be reliable and the higher DC voltage imposes considerable stress and limitation on the drive circuits.

US-A-4 239 346 to Lloyd describes a fabrication technique for the drive system of US-A-3 872 360.

US-A-4 094 582 to Goodman et al describes a drive system for a LCD employing a single FET device per liquid crystal PEL. The device does not have memory and develops significant DC voltage across the liquid PEL. The lack of memory limits the drive system of US-A-4 239 582 to relatively low density and/or very high refresh rates. Further, the development of the DC voltage across the liquid crystal PEL reduces reliability of the liquid crystal material. The drive system according to the present invention has built in memory and eliminates DC build up across the liquid PEL.

US-A-3 485 292 to Nonomura et al describes a segmented liquid crystal display as opposed to a matrix LCD. As with US-A-3 872 360, the circuit includes a transistor plus a capacitor driving the LCD segment. As before, this system suffers from the yield and reliability disadvantages of the capacitor. The drive system according to the present invention has built in memory and does not require capacitors for storage of PEL drive data.

US-A-4 103 297 to McGreivey et al appears to be an improvement to the arrangements shown in US-A-3 872 360 and US-A-4 239 346, in which improved arrangement, an ion implantation is used to create a light sensitive FET structure driving each individual PEL. However, the circuit still employs a transistor plus a capacitor with the disadvantages as described above.

IBM Technical Disclosure Bulletin Vol 23, Number 6, November 1980 at page 257 describes a liquid crystal drive system requiring a capacitor and a resistor per picture element (PEL).

IBM Technical Disclosure Bulletin Vol 23, Number 8, January 1981, page 3641 describes a AC drive system for a LCD requiring a capacitor for storage for each PEL.

Although the prior art shows a variety of techniques for driving liquid crystal display systems, none of the prior art identified above shows a drive system in which internal memory for each PEL driver eliminates the need for a separate memory device such as a capacitor or bistable memory cell.

In an article by DiMaria et al in the IEEE Electron Devices Letters, Vol EDL-1, Number 9, page 1797; September 1980, a dual electron injector structure is described which includes an electrically alterable memory employing a floating polycrystalline silicone storage layer and silicon rich SiO electron injectors. The article generally describes the electrically alterable memory using a dual electron injector structure. However, the article does not describe nor suggest the circuit structure employed in a preferred embodiment of the present invention nor the context of its use.

EP-A-0 034 796 shows a liquid crystal display in which the liquid crystal is a nematic substance encased between a glass plate and transparent electrodes on the one side and a dielectric layer on the other, isolated from any direct current contact with the electronics which drive the display. The electronics comprised conventional bistable storage cells in a mono-silicon substrate and are isolated from the dielectric by a coating through which certain electrode connected to the memory cells pass. Simple construction and high resolution are claimed for this arrangement.

However, a key problem with driving such a liquid crystal is that there must be no DC component of the signal across the liquid crystal PEL greater than 25 millivolts. This is avoided, although the problem is not referred to, in the arrangement of '796 by the dielectric layer though its presence is thought to slow the operation of the display.

The present invention overcomes this problem by replacing the dielectric layer and the coating by a polysilicon layer in which the memory cells are fabricated and by the particular use, not previously suggested, of particular memory cells, not previously suggested for use in liquid crystal displays.

US-A-4 104 675 shows the use of a graded bandgap structure of silicon enriched $SiO_2$ between pure $SiO_2$ and metal or silicon to significantly enhance the injection of either holes or electrons from conductor through the silicon enriched insulator. It is this concept which is used in the creation of the DEIS, the memory devices described by DiMaria et all discussed above. The patent and the referenced article in no way suggest the LCD drive circuit of the present invention.

A paper presented at the 1981 IEEE International Solid States Circuit Conference at page 38 of the proceedings thereof, describes a dual gate floating gate FET device which operates with a single polarity voltage and which has a write/erase operation independent of the field effect transistor action. The present invention incorporates a similar type of 'dual gate dual electron injection structure (DEIS) as described above, into the PEL drive circuitry. The DEIS device function in the arrangement of the invention is to store the state of the PEL, i.e either selected or not selected. In the selected state, the DEIS device is conductive and the AC drive signal is imposed across the LC cell. On the other hand, when the DEIS device is 'programmed off', it is in its open circuit condition and thereby isolates the AC signal from the LC PEL.

However, instead of utilising the DEIS structure on single crystalline silicon as above, the present invention incorporates the dual gate DEIS structure on polysilicon. The processing techniques used to create the DEIS structure is consistent with the processing techniques used for making polysilicon FET devices for large area display devices. Specifically, these processes include low pressure chemical vapour depositions at relatively low temperatures (600 degrees C). (The circuits, devices and processes are discussed in greater detail below.)

The paper 'Polysilicon FET Devices for Large Area Input/Output Applications' by S Depp, A Juliana and B Huth in the IEDM Technical Diges, pages 703 to 706, 1980 in addition to describing the FET device characteristics of polysilicon devices, also describes PEL circuit drive schemes for large area LCD's.

The PEL drive circuitry described in the Article also eliminates the capacitor as a memory element per PEL, being replaced by a memory circuit. The memory circuit is a classic latch or flip-flop. In one case, the circuit consists of 4 transistors and 2 polysilicon resistors and in the second case, a CMOS version, the resistors are replaced with active devices. The first version, somewhat simpler to fabricate, consumes DC power, the level a function of process capability. The second case, the CMOS latch dissipates no DC power but has a total of 6 active devices.

In summary, the PEL circuits suggested by S Depp et al do have built-in memory but it is considerably more complex than its counterpart arrangement in the present invention.

The present invention will be described further by way of example with reference to an embodiment thereof as illustrated in the accompanying drawings, in which:-

Figure 1 is a perspective view of a Liquid Crystal Display device according to a preferred embodiment of the present invention;

Figure 2 is a schematic diagram of a PEL drive circuit in the context of the embodiment; and

Figure 3 is a graphical representation of the transfer function of the drive circuit of Figure 3.

In the drawing, like elements are designated with similar reference numbers, and identical elements in different specific embodiments are designated by identical referenced numbers.

Large area, or high picture element (PEL) content liquid crystal displays need to to be driven using "active matrix addressing" versus passive matrix addressing associated with multiplex displays. In a passively addressed display, the electric field across a liquid crystal "CELL" is determined by the coincident fields of respective X lines and Y lines at CELL locations, however, with active addressing, the address lines control active addressing, the address lines control active devices which are in electrical contact with individual PELs.

The described embodiment employs a type of liquid crystal material known as twisted nematic with dye. This material has the key attribute of requiring very small AC signals (in the order of 0.5 to 1.5 volts rms) to change the optical characteristic from opaque to transparent (with the use of a single polariser).

However, a key problem with driving such a liquid crystal is that there must be no DC component of the signal across the liquid crystal PEL greater than 25 millivolts.

As liquid crystal material has no memory characteristic, it is necessary to have an electronic memory element, (such as a latch, capacitor, etc) associated with each liquid crystal PEL.

The preferred embodiment of the present invention is shown in Figure 1. This embodiment includes a liquid crystal material 20 sandwiched between a glass plate 22 and a polysilicon layer 24 on fused quartz or alumina. The deposited polysilicon is used to form FET devices.

The drive circuit for driving the liquid crystal display PELs of the embodiment is shown in Figure 2. FET transistor T1 is an electronically alterable FET such as is described in the DiMaria article referred to above. For polysilicon devices on large area glass a similar structure can be made as a dual electron injector structure as is described in DiMaria et al. The process includes chemical vapour deposition to make the Si rich Si02/Si02/Si rich Si02 sandwich layer. Due to the different doping and conduction characteristics of the polysilicon FET devices, the thickness f the dual electron injector structure (DEIS) may be changed.

The operation of the DEIS electronically alterable FET is as follows.

To 'erase' T1, i.e to transfer negative charges from control gate to floating gate, the coincidence of a positive voltage of approximately plus 15 volts at input A (row A) to 0 volts at input B (column B) would make T1 an enhancement-mode FET with a threshold voltage of approximately +8V. Each unselected device sharing the same column as T1 would have its ROW input (A' etc) biased to 7.5V. The 7.5V would be inadequate bias to cause these other devices to be turned on. That is insufficient voltage to cause any change in the conductive nature of the 'unselected' devices. The voltage that controls the conduction of the FET devices is between control gate A (A' etc) and the source which are all commonly connected to V1. V1 signal is always positive (see Figure 3). Note also that the voltage across the two inputs of the unselected devices in column B is only 7.5 volts (7.5-0) as all other columns are biased to 7.5 volts, the devices in row A being biased to 7.5 volts (15-7.5), all other devices being biased to 0 volts (7.5-7.5). Hence, the only devices that could have any charge transfer are in column B and have 0 volts on their row inputs. All other devices have fields, across their inputs, insufficient to cause any charge transfer from their respective control gates to their respective floating gates.

Similarly, when it is desired to 'write' T1, remove negative charges from the floating gate by applying a positive voltage of 15V to input B and 0V to input A. Again, the 'unselected' devices sharing the same column will have their respective row voltage set at 7.5V and thereby be undisturbed with a total voltage of 7.5V (7.5-15) applied across their control gates. With proper design of surface doping etc, each selected device with its floating gate charge removed will have a negative threshold voltage of -8V, hence having become a depletion mode device.

Figure 3 is a transfer diagram showing the current voltage characteristics of an enhancement mode device and depletion mode device of the kind in question.

To demonstrate how the drive circuitry applies bias to the selected PELs consider first the case where T1 has been 'written' and is now a depletion device. The total drive voltage across the gate of the device is (voltage at A - voltage at V1). Notice that V1 is an AC voltage of 2volts to 4 volts peak-to-peak riding on a bias voltage (VREF) of approximately 3v, (though it could vary several volts from this). Since T1 is now a depletion device with considerable forward bias, its impedance is relatively low (and very low compared to the liquid crystal impedance). As a result, the voltage impressed across the liquid crystal PEL is the full AC voltage (2-4v p-p) with NO DC component.

Figure 3 shows the wave form at V1.

Note also that the net voltage at V1 is always positive and hence the voltage between the FET gate (A etc) and source (V1) of any FET in the array is always less than 7.5v which is below the enhancement device's threshold voltage.

The 'erased' FET's which are enhancement devices will look like very high impedance to the liquid crystal and therefore no AC signal will pass through these FETs and be impressed across the LC cell. One can consider the impedance of the 'biased off' enhancement FET's as a very small capacitance and the LC cell as a very large capacitance, the ratio of perhaps 1000. Or equally, one can consider the resistance of each biased-off, enhancement mode FET to be greater than 100 megohms and R1 (R2 etc) to be 1 megohm. Again, the impedance ratio is such as to assure no measurable AC signal across un-selected PELs.

As stated above, it is very important to assure no average DC appears across the LC PEL. Hence, the resistors R1, R2, etc are introduced to provide a conducting path for the off-biased FETs. All FETs have some leakage current and assuming maximum never exceeds 25 nano-amps, the DC shift with R's at 1 megohm would be within 25 mv, an acceptable level for liquid crystals.

In summary, the arrangement of the embodiment ensures the ability to write or erase high content, liquid crystal displays with a very simple drive circuit. Such a simple drive circuit eliminates the need for refresh electronics including memory. Further, information is not lost due to power interruption.

## Claims

1. A liquid crystal display device (LCD), comprising: a conducting glass plate (22); a substrate; a matrix of electrodes; each of the electrodes defining a picture element (pel) in the LCD; a twisted nematic with dye liquid crystal material (20) interposed between the glass plate and the substrate; a plurality of FET devices (T1, T2), there being one or more FET devices associated with each of the electrodes, each FET device being connected to external control signal lines, the FET devices comprising data storage and pel signal selection means; and means for applying control signals selectively to the FET devices to display an image on the LCD, characterised in that a polysilicon layer is deposited on the substrate, supporting the matrix of electrodes and bounding the liquid crystal material on one side; in that the plurality of FET devices are formed in the polysilicon layer and in that said FET devices belong to the Dual Electron Injector Structure category.

2. A display as claimed in claim 1, wherein the substrate comprises a fused quartz material.

3. A display device as claimed in claim 1, wherein the substrate comprises alumina.

4. A display device as claimed in any preceding claim, further comprising a plurality of resistors (R1; R2), each resistor sharing a common node with one of the FET devices and an associated LC pel for providing bias to the pel and a conduction path for FET leakage current.

## Patentansprüche

1. Flüssigkristall-Anzeigebauelement (LCD) mit einer leitfähigen Glasplatte (22), einem Substrat, einer Matrix von Elektroden, wobei jede Elektrode ein Bildelement (pel) in dem LCD definiert, einem verdrehten nematischen Flüssigkristallmaterial mit Farbstoff (20), das zwischen der Glasplatte und dem Substrat gelegen ist, einer Vielzahl von FET-Bauelementen (T1, T2), wobei mit jeder Elektrode ein oder mehrere FET-Bauelemente verbunden sind, jedes FET-Bauelement an äußere Steuersignalleitungen geschaltet ist, die FET-Bauelemente Datenspeicher und pel Signal-Auswahlmittel und Mittel zum auswählenden Anlegen von Steuersignalen an die FET-Bauelemente aufweisen, um ein Bild auf dem LCD anzuzeigen, dadurch gekennzeichnet, daß eine Polysiliziumschicht auf dem Substrat aufgebracht ist, welche die Matrix von Elektroden trägt und das Flüssigkristallmaterial an einer Seite begrenzt, daß die Vielzahl von FET-Bauelementen in der Polysiliziumschicht ausgebildet ist und daß die FET-Bauelemente der Kategorie Duale-Elektroneninjektionsstruktur angehören.

2. Anzeige nach Anspruch 1, bei welcher das Substrat aus einem Quarzglasmaterial besteht.

3. Anzeige nach Anspruch 1, bei welchem das Substrat aus Aluminiumoxyd besteht.

4. Anzeige nach irgendeinem der vorhergehenden Ansprüche, das ferner eine Vielzahl von Widerständen (R1; R2) aufweist, wobei jeder Widerstand einen gemeinsamen Knoten mit einem der FET-Bauelemente und einem verbundenen LC pel zum Liefern von Vorspannung an das pel und einer Leitbahn für einen FET-Leckstrom teilt.

**Revendications**

1. Dispositif d'affichage à cristal liquide comprenant : une plaque de verre conductrice (22) ; un substrat ; une matrice d'électrodes ; chacune des électrodes définissant un élément d'image (PEL) dans l'affichage à cristal liquide ; une matière à cristal liquide de type nématique à torsion avec colorant (20), interposée entre la plaque de verre et le substrat ; une pluralité de dispositifs FET (T1, T2), un ou plusieurs dispositifs FET étant associés à chacune des électrodes, chaque dispositif FET étant connecté à des lignes de signaux de commande extérieurs, les dispositifs FET constituant des moyens de stockage de données et de sélection de signal de PEL ; et des moyens pour appliquer les signaux de commande sélectivement aux dispositifs FET afin d'afficher une image sur l'affichage à cristal liquide, caractérisé en ce qu'une couche de silicium est déposée sur le substrat, de façon à supporter la matrice d'électrodes et à délimiter la matière de cristalliquide d'un côté; en ce que la pluralité de dispositifs FET est formée dans la couche de polysilicium; et en ce que lesdits dispositifs FET appartiennent à la catégorie de Structure à Double Injecteur d'Electrons.

2. Affichage suivant la revendication 1, dans lequel le substrat comprend une matière du type quartz fondu.

3. Dispositif d'affichage suivant la revendication 1, dans lequel le substrat comprend de l'alumine.

4. Dispositif d'affichage suivant l'une quelconque des revendications précédentes, comprenant en outre une pluralité de résistances (R1; R2), chaque résistance partageant un noeud commun avec un des dispositifs FET et un PEL de cristal liquide associé, pour fournir une polarisation au PEL et un chemin de conduction pour le courant de fuite du FET.

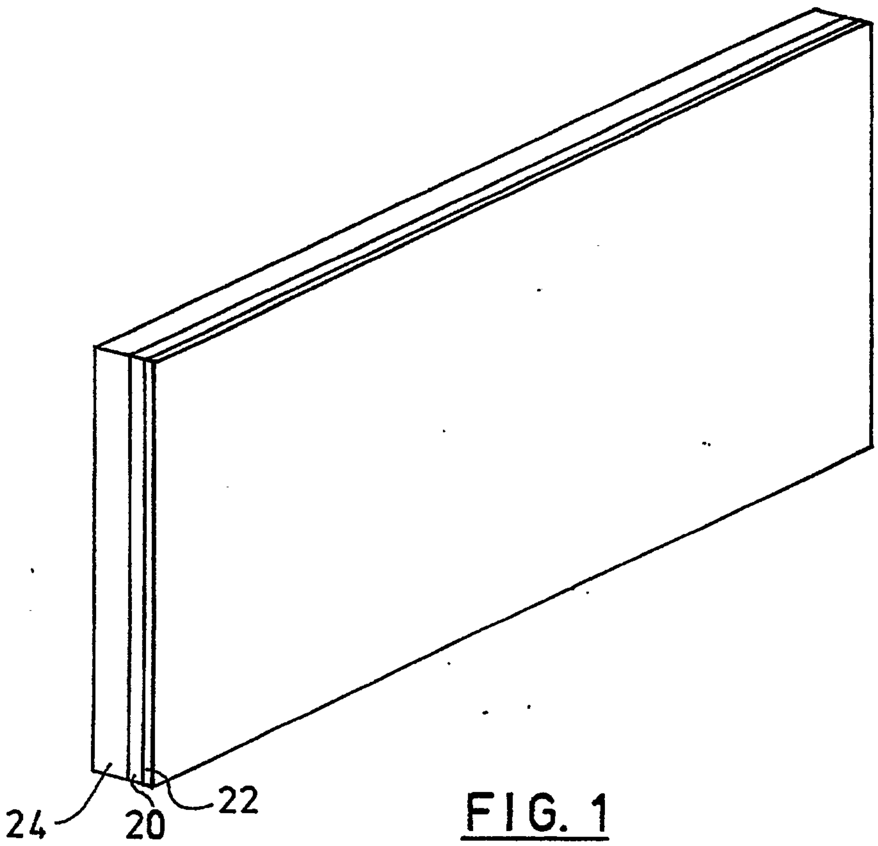


FIG. 1

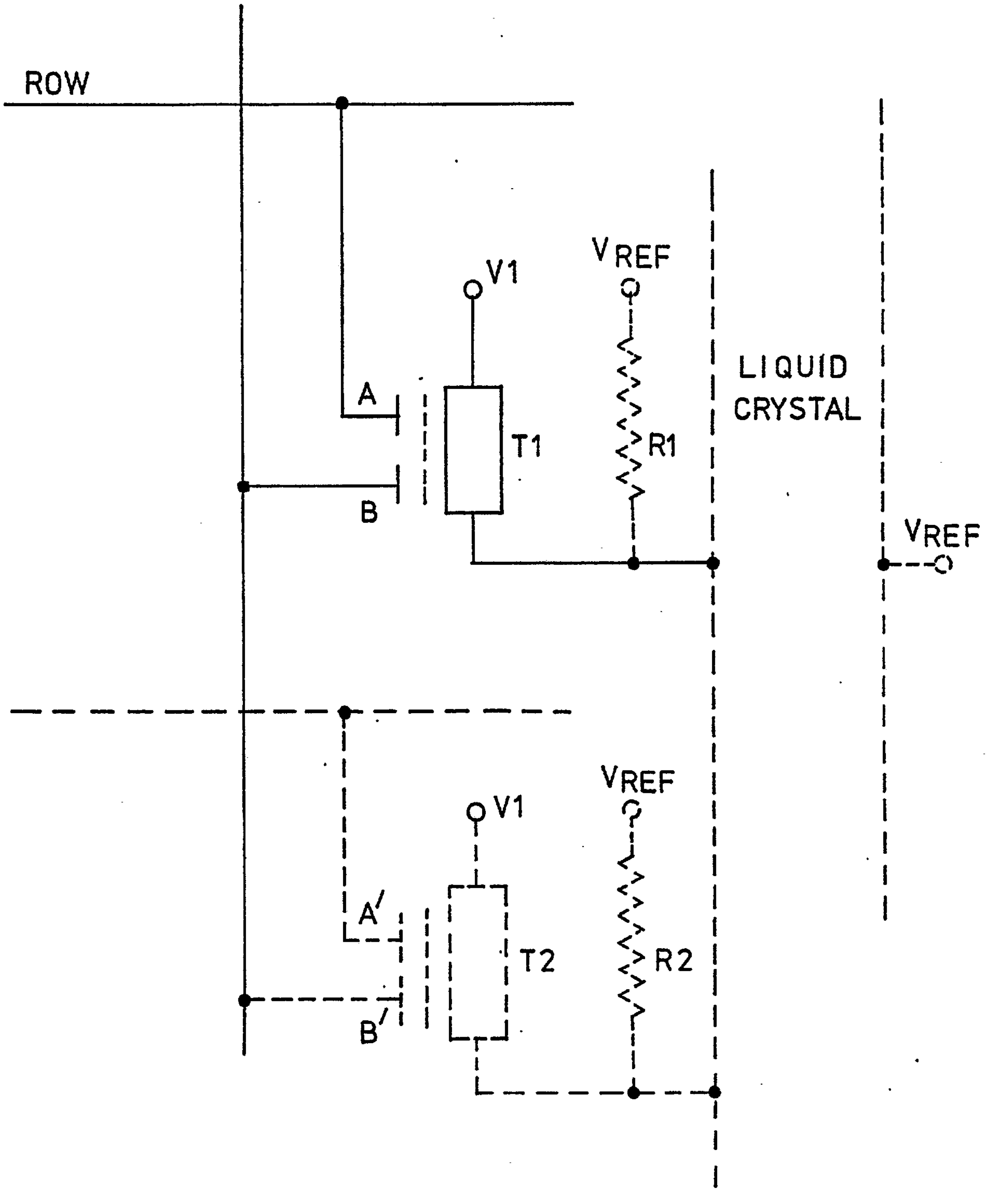


FIG. 2

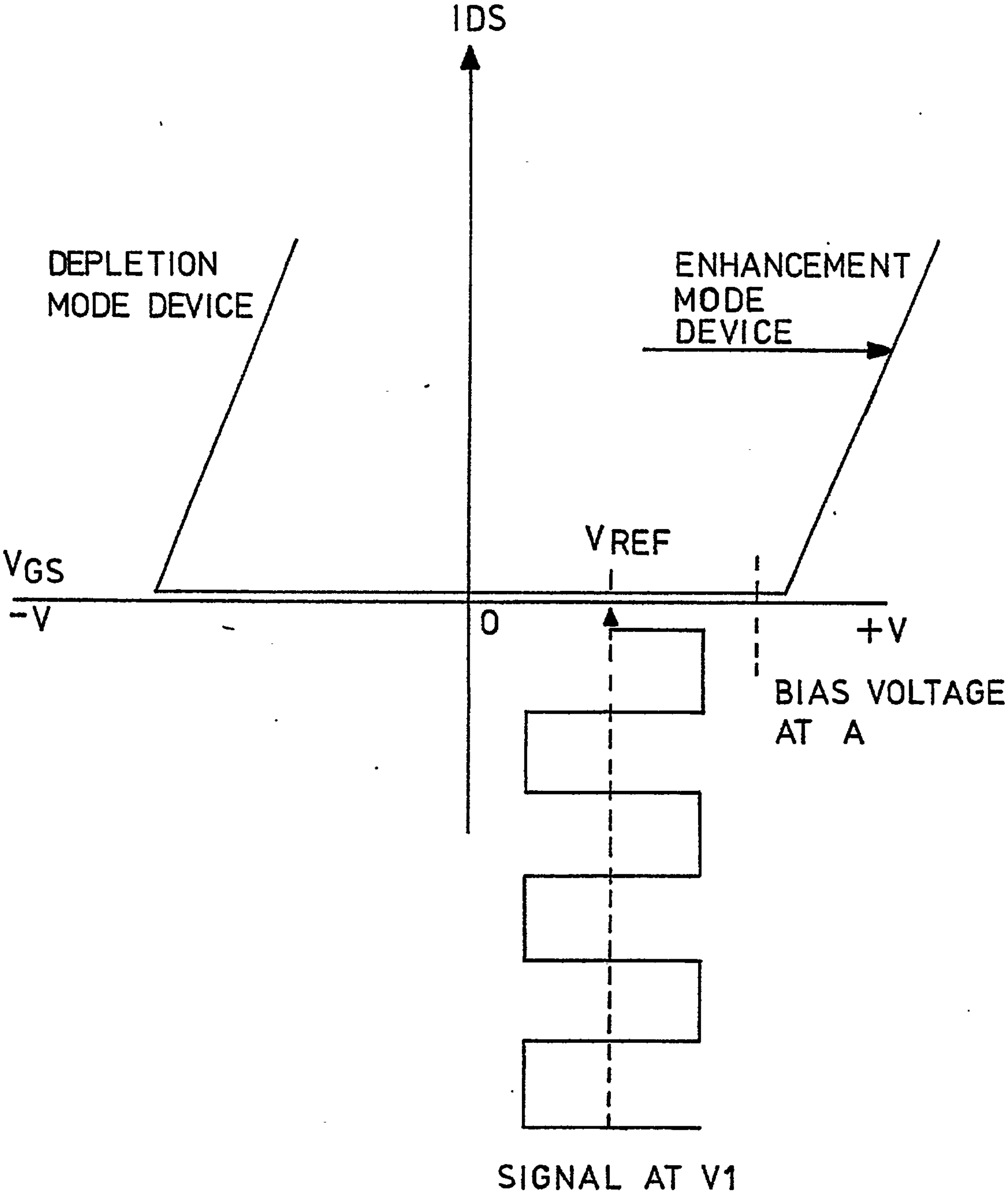
IDS
DEPLETION
MODE DEVICE
ENHANCEMENT
MODE
DEVICE
VGS
VREF
-V
0
+V
BIAS VOLTAGE
AT A
SIGNAL AT V1

FIG. 3